# EUROPÄISCHE PATENTSCHRIFT

(11) **EP 1 810 884 B1**
(45) Veröffentlichungstag und Bekanntmachung des Hinweises auf die Patenterteilung: **16.04.2008**
(21) Anmeldenummer: 06021804.7
(22) Anmeldetag: 18.10.2006
(51) Int. Cl.: B60R 5/00

(54) **Abgedichteter Skisack**
Sealed ski sack
Sac à ski scellé

(30) Priorität: 24.01.2006 DE 102006003518
(43) Veröffentlichungstag der Anmeldung: 25.07.2007
(73) Patentinhaber: BOS GmbH & Co. KG, 73760 Ostfildern (DE)
(72) Erfinder: Thoma, Waldemar, 40789 Monheim (DE); Sitzler, Wolfgang, 42111 Wuppertal (DE); Reisinger, Alexander, 40764 Langenfeld (DE)
(74) Vertreter: Rüger, Barthelt & Abel Patentanwälte

(56) Entgegenhaltungen:
- EP-A2- 0 745 513
- DE-A1- 3 901 354
- DE-C1- 19 637 029

## Beschreibung

Skier stellen ein verhältnismäßig sperriges Ladegut dar. Aufgrund ihrer Länge sind sie im Koffer- oder Laderaum weder von Kombi-Pkw noch von normalen Pkw unterzubringen. Um sie dennoch einigermaßen komfortabel transportieren zu können ist in der Rücksitzlehne der Fahrzeuge eine sogenannte Durchladeöffnung enthalten. Die Durchladeöffnung dient der Verankerung eines Skisacks. Der Skisack ist in Richtung auf das Heck des Fahrzeugs offen, um von dort her die Skier einschieben zu können. Im Gebrauch ragt der Skisack in die Fahrgastzelle hinein, und zwar bis kurz vor die Rückseite der Rücksitzlehnen der Vordersitze.

Die Sackhülle ist in der Regel aus einem plastifizierten textilen Flächengebilde zusammengenäht. Die Plastifizierung sorgt für eine Wasserundurchlässigkeit, damit Schnee und Wasser, das beim Verladen der Skier an diesen haftet, nicht durch den Skisack hindurch auf das Sitzpolster des Rücksitzes laufen kann.

Die Nähte sind an sich wasserdurchlässig und werden mit Hilfe von aufgeklebten oder aufgeschweißten Dichtungsbändern abgedichtet. Eine besonders kritische Stelle bildet dabei jene Bodennaht, die die schlauchförmige Sackhülle endseitig zum Sack verschließt. Ein endseitiges rechtwinkliges Abschneiden der Sackhülle führt dazu, dass das Dichtband, das beim fertigen Sack naturgemäß auf dessen Innenseite und damit auf der linken Seite des Textilgebildes verläuft, rechtwinklig über die betreffende Längskante der Sackhülle verläuft. Auf der einen Seite dieser Kante ist das Gebilde vierlagig, nämlich bestehend aus zwei Lagen Sackhülle und zwei Lagen Dichtungsband, während auf der anderen Seite dieser Längskante das Gebilde nur noch zweilagig ist und nur noch die beiden Lagen des Dichtungsbands aufweist. Der Übergang von der vierlagigen Konformation zur zweilagigen Konformation ist beim Aufschweißen sehr problematisch und praktisch nicht brauchbar abzudichten.

Es wurde deswegen in der Vergangenheit versucht, die Sackhülle so abzuschneiden, dass die stirnseitige Naht ein Stück weit rechtwinklig zur Längsachse des Sacks verläuft und am unteren Ende etwa unter 45°. Dadurch wurde die Abdichtung im Bereich des unteren Endes der Bodennaht etwas verbessert, ohne dass die Problematik des Übergangs von der vierlagigen auf die zweilagige Konformation vermieden wurde. Eine weitere Problemstelle stellt nunmehr der Übergang von der geraden zur schräg verlaufenden Kante dar. Mit einem einzigen durchlaufenden Dichtband konnte diese Stelle nicht beherrscht werde. Vielmehr wurde ein Stück Dichtband über den geraden Abschnitt gelegt und ein weiteres Stück Dichtband über den schrägen Verlauf. Dort wo sich die Bänder überdecken ergibt sich somit ein sechslagiger Stapel während nebendran der Stapel lediglich vierlagig ist. Die Übergangsstelle bereitet nach wie vor Probleme hinsichtlich der Dichtigkeit.

Die EP 0 745 513 A2 beschreibt einen Skisack für Durchladesysteme an Kraftfahrzeugen. Die Sackhülle ist an einem Ende an einer in dem Fahrzeug einsetzbaren Zarge befestigt und am gegenüberliegenden Ende verschlossen. Die Sackhülle soll bei Nichtgebrauch zusammengefaltet und in die Zarge gelegt werden. Um das Zusammenfalten zu erleichtern, so dass minimaler Stauraum benötigt wird, ist die Sackhülle an der Ober- und an der Unterseite mit Abnähernähten versehen, die bei Flachlegen der Sackhülle auf eine Seitenfläche eine zick-zack-förmige oder Leporellogestalt ergeben.

Die Patentanmeldung befasst sich nicht mit dem oben diskutierten Problem der Abdichtung im Bodenbereich und der Abdichtung der Übergangsstelle zwischen den einzelnen Nähten. Es ist lediglich angegeben, dass die Abnähernähte sowie die Fügenaht an einer Längskante durch Abdichtbänder verschlossen werden.

Ausgehend hiervon ist es Aufgabe der Erfindung, eine Skisackanordnung zu schaffen, die sich durch eine verbesserte Dichtigkeit auszeichnet, ohne dass auf der anderen Seite ein größerer Herstellungsaufwand betrieben werden muss.

Diese Aufgabe wird erfindungsgmäß durch die Skisackanordnung mit den Merkmalen des Anspruches 1 gelöst.

Die neue Skisackanordnung weist einen Anschlussrahmen auf, der in eine Durchladeöffnung in dem Kraftfahrzeug einsetzbar ist. An dem Anschlussrahmen ist die Sackhülle der Skisackanordnung befestigt. Die Sackhülle wird von einer weitgehend wasserdichten Textilbahn gebildet.

Die Textilbahn ist durch eine Längsnaht zu einem Schlauch geschlossen, wobei die Textilbahn im Übrigen in Umfangsrichtung ungeschnitten durchgeht.

An dem von dem Anschlussrahmen abliegenden Ende ist eine Bodennaht vorgesehen, die aus dem Textilschlauch einen endseitig geschlossenen Sack macht. Die Bodennaht beginnt an einer Seite des Schlauches, die bei dem fertigen Sack die Unterseite bildet und führt von dort zumindest angenähert einem Viertelkreis folgend zu einer Stelle, die bei dem fertigen Sack von der Unterseite des Sacks beabstandet ist.

Auf diese Weise ist es möglich, das Dichtungsband, das längs der Bodennaht mit der Textilbahn abdichtend stoffschlüssig verbunden ist, von der Unterseite bis zur Oberseite des fertigen Sacks bezogen auf die Gebrauchsstellung ungeschnitten durchlaufen zu lassen. Es gibt im Bereich der Bodennaht keine Stellen, an der sich Abschnitte des Dichtungsbandes wechselseitig überdecken. Das Band läuft am ende auf der linken Seite der Sackhülle aus; das Ende des Dichtbandes liegt auf der Sackhülle.

Je nach Ausbildung kann die Bodennaht als Viertelkreis von der Unterseite bis zur Oberseite reichen oder aber von der Unterseite bis auf halbe Höhe der gesamten Sackhöhe und von dort aus als gerade Naht bis zur oberen Längsnaht weiterführen. Auch in diesem Falle ist lediglich ein ungeschnittenes Dichtungsband vorhanden, das der Bodennaht kontinuierlich folgt.

Für welche der beiden Varianten sich der Konstrukteur entscheidet hängt davon ab, wie stark er das Sackende verrunden will und welche Krümmungen das Dichtungsband ohne Faltenwurf zulässt.

Ein Viertelkreis, der sich über die gesamte Höhe des Dachs erstreckt und damit einen Radius hat, der etwa der Sackhöhe entspricht, schneidet im unteren Bereich des Sacks einen großen Raumanteil ab. Dafür ist der Krümmungsradius entsprechend sehr groß und es können auch wenig stauchfähige Dichtungsbänder verwendet werden. Eine Bodennaht hingegen, bei der der Krümmungsradius deutlich kleiner ist als die Höhe des fertigen Sacks gemessen in Richtung parallel zur Bodennaht, ergibt einen günstigeren Staumraum, erfordert allerdings Dichtungsbänder, die ohne Faltenwurf der engen Krümmung folgen können.

Besonders gute Dichtungsverhältnisses im Bereich der Unterseite des fertigen Sacks werden erhalten, wenn das Dichtungsband in diesem Bereich tangential zu der Unterseite verläuft. Unter tangential ist hierbei der Verlauf des Dichtungsbadens zu verstehen, wenn es während der Fertigungsprozedur auf die linke Seite der Sackhülle aufgebracht wird. Der Umbug des Dichtungsbands verläuft hier unmittelbar anliegend an die bei der Fertigungsprozedur entstehenden Faltkante in der Sackhülle. Das Dichtungsband erstreckt sich dabei deutlich über das Ende der Schnittkante an der Sackhülle hinaus, die die bogenförmige Struktur definiert. Über die gesamte Länge des Dichtungsbandes wird durchgehend eine vierlagige Struktur erhalten, und zwar auch am Auslauf des Dichtungsbandes, dort wo dessen Schnittkanten sind. Eine sechslagige Struktur tritt nur dort auf, wo das Dichtungsband der Bodennaht auf das Dichtungsband der Längskante trifft. Allerdings ist dies in der Gebrauchsstellung die obere Ecke der Bodennaht. An dieser Stelle ist in keinem Falle beim normalem Gebrauch mit einem Wasseraustritt zu rechnen.

Damit sich die Sackhülle leichter verstauen lässt, enthält sie in Längsrichtung verlaufende Abnähernähte. Durch diese Abnähernähte wird dem Skisack im Bereich der Oberseite und im Bereich der Unterseite ein in Querrichtung zick-zack-förmiger Verlauf aufgezwungen. Der Skisack kann so leicht auf der Flankenseite liegend zu einem flachen Gebilde gefaltete werden, wobei über die gesamte Länge die Ober- und die Unterseite zwischen die Flankenflächen eingefaltet sind. Die Abnähernähte erzeugen auch hierbei in der Lage fixierte "Bügelfalten", was die Handhabung erheblich erleichtert.

Die Abnähernähte sind zweckmäßigerweise so angeordnet, dass sie an dem fertigen Sack nach außen vorstehende Keder bilden, die in Längsrichtung durchlaufen.

Zumindest einige der Abnähernähte, nämlich die an der Unterseite, sind abgedichtet.

Aufgrund der neuen Anordnung des ungeschnitten durchlaufenden Dichtungsbandes an der Bodennaht ist es bei dem erfindungsgemäßen Sack auch möglich, an der Unterseite eine Abnähernaht vorzusehen, die einen nach innen ragenden Keder erzeugt. In diesem Falle würde sich das Dichtungsband von der Bodennaht ungeschnitten über die Abnähernaht an der Unterseite des Skisacks fortsetzen und die dort vorhandene Abnähernaht mit abdichteten. Eine solche auch an der Unterseite vorhandenen Abnähernaht würde das Einfalten der Unterseite und somit das programmgemäße Flachlegen des Skisacks auf einer Flankenfläche deutliche erleichtern.

Die Dichtbänder selbst werden vorteilhafter Weise nicht vernäht, sondern sind mit der Sackhülle lediglich stoffschlüsig verbunden. Dabei kommt sowohl eine Verkleben als auch ein Verschweißen in Frage.

Besonders haltbare Dichtbänder werden erhalten, wenn diese textilverstäkt sind.

Die Befestigung und Verankerung des Sacks in dem Rahmen wird erleichtert, wenn der Sack an seinem offenen Ende eine um die Sacköffnung umlaufende Wulst aufweist.

Im Übrigen sind Weiterbildungen der Erfindung Gegenstand von Unteransprüchen.

In der nachfolgenden Figurenbeschreibung wird ein bevorzugtes Ausführungsbeispiel der Erfindung erläutert. Es versteht sich, dass dieses bevorzugte Ausführungsbeispiel in mannigfaltiger Weise abgeändert werden kann, um es an den jeweiligen Einsatzzweck anzupassen. Darüber hinaus ist die Darstellung vereinfacht und beschränkt sich auf das für das Verständnis der Erfindung Wesentliche.

In der Zeichnung zeigen:
- Fig. 1: den hinteren Teil des Fahrgastraums eine Pkws, in einer teilweise aufgeschnittenen vereinfachten perspektiveischen Darstellung mit der dort enthaltenen Box, die einen Skisack enthält;
- Fig. 2: das Fahrzeug nach Fig 1 in der in Gebrauchsstellung befindelichen Skisack;
- Fig. 3 bis 6: die Sackhülle des Skisacks nach Fig. 2 in unterschiedlichen Herstellungsschritten, jeweils in einer perspektivischen Darstellung beziehungsweise in einer Seitenansicht.

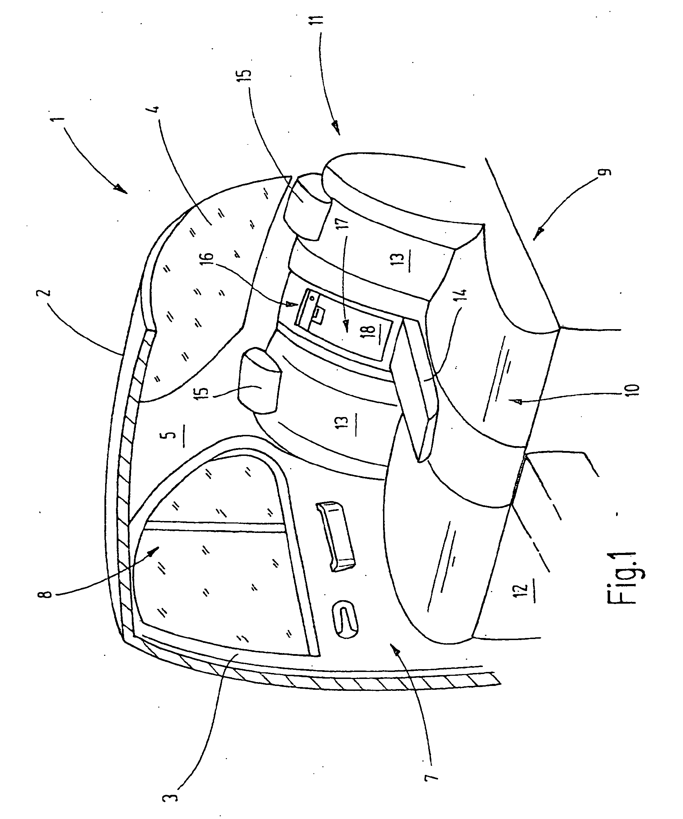

Fig. 1 stellt den aufgebrochenen, abgeschnittenen Fontbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen, wie Versteifungen und Befestigungsmittel nicht gezeigt, da ihre Darstellung für das Verständnis der Erfindung nicht erforderlich ist. Ebenso ist die Darstellung der Karosserie schematisiert, und lässt die dort vorhandenen Hohlräume nicht erkennen.

Der veranschaulichte Karosserieabschnitt 1 weist ein Dach 2 auf, von seitlich eine B-Säule 3 nach unten zu einer nicht gezeigten Bodengruppe führt. Eine entsprechende B-Säule wäre auf der weg gebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine nicht weiter zu erkennende Innenverkleidung.

Zwischen der B-Säule 3 und der C-Säule 5 ist eine B-Säule 3, eine hintere rechte Seitentür in bekannter Weise anscharniert. Die Seitentür 7 enthält ein Fenster 8.

Auf der Höhe der hinteren rechten Seitentür 7 befindet sich eine Rücksitzbank 9 zu der eine Sitzfläche 10 sowie eine Rücksitzlehne 11 gehören. Die Rücksitzfläche 10 liegt auf einer Sockelfläche 12, die zu der Bodengruppe gehört und in der Fußräume ausgebildet sind.

Die Rücksitzlehne 11 gliedert sich in einen rechten und einen linken Rückenlehnenabschnitt 13, die voneinander wie gezeigt ein Stück weit beabstandet sind. In diesem Zwischenraum befindet sich ein Mittelarmlehnenabschnitt 14, der an seiner Unterkante anscharniert ist und aus der gezeigten liegenden Stellung in eine hochgeklappte Stellung geführt werden kann, in der er die beiden Rückenlehnenabschnitte 13 miteinander verbindet, um so einen dritten Notsitz zu schaffen. An der Oberkante der Rückenlehnenabschnitte 13 befinden sich Kopfstützen 15. In dem normalerweise durch den mittigen Mittelarmlehnenabschnitt 14 verdeckten Bereich befindet sich eine Fassungsanordnung 16, in die eine Skisackbox 17 eingesetzt ist. Die Fassungsanordnung 16 ist karosseriefest beziehungsweise in der Struktur für den rechten Rückenlehnenabschnitt 13 untergebracht, wie dies heute bei Kraftfahrzeugen üblich ist.

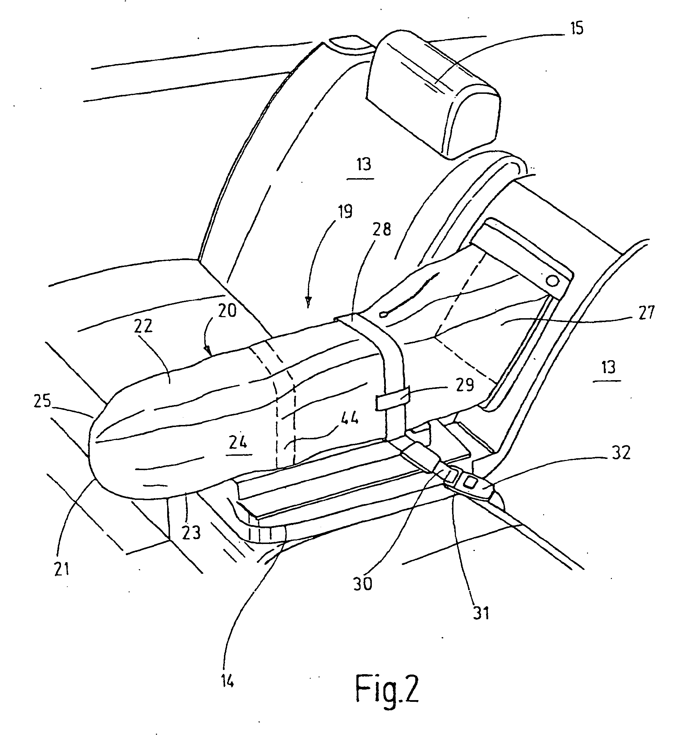

Die Skisackbox 17 ist ein im wesentlichen quaderförmiger Kasten, der an seiner Vorderseite eine am unteren Ende anscharnierte Klappe 18 trägt. Eine weitere (nicht dargestellte) Klappte verschließt die Skisackbox 17 auf der Rückseite in Richtung auf den nicht gezeigten Lade- oder Kofferraum, der sich an die Rücksitzlehne 11 anschließt. Durch Herunterklappten der vorderen Klappe 18 kann ein Skisack 19 in die Fahrgastzelle herausgezogen werden, wie dies Fig. 2 zeigt. Der Skisack 19 besteht aus einer biegeschlaffen Sackhülle 20, die am Sackboden durch eine Bodennaht 21 verschlossen ist.

Der Skisack 19 ist, wäre er steif, im Querschnitt rechteckig und wird von einer Sackoberseite 22 einer Sackunterseite 23 und zwei Sackflanken 24, 25 begrenzt.

Das von der Bodennaht 21 abliegende Ende der Sackhülle 20 ist innerhalb des rahmenförmigen Grundkörpers verankert. Hierdurch öffnet sich der Skisack 19 mit seiner Einstecköffnung 27 in Richtung auf den Lade- oder Kofferraum.

Um ein wildes Herumschleudern des Skisacks 19 mit den darin verstauten Skiern zu vermeiden, ist ein Gürtel 28 vorgesehen, der durch an der Skisackhülle 20 vernähte Laschen 29 hindurchführt und mit Gurten 30 versehen ist. Die Gurte 30 tragen an ihrem freien Enden Einsteckteile 31, die zum Einstecken in Gurtschlösser 32 von Sicherheitsgurten der Rücksitzbank 11 vorgesehen sind.

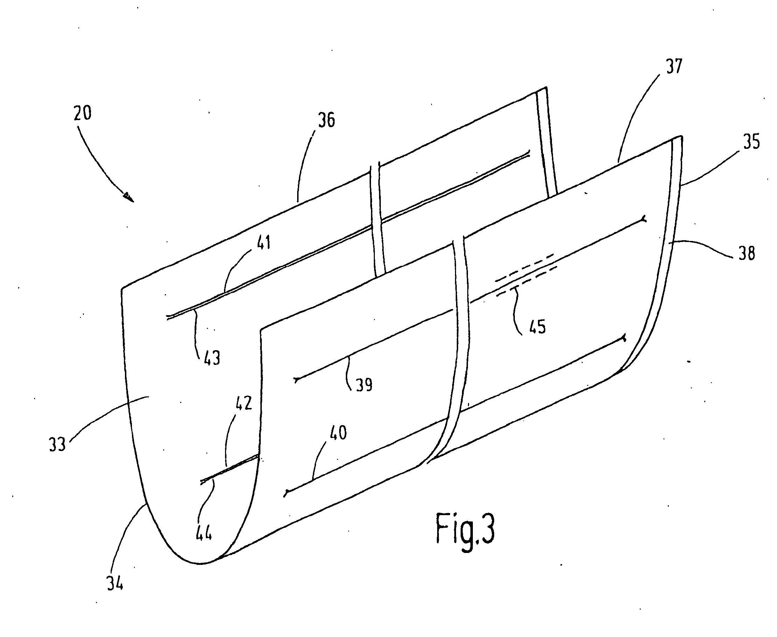

Die Gestaltung der Sackhülle 20 ergibt sich aus der Darstellung der Fig. 3 bis 6. Die Gestaltung der Sackhülle wird nachfolgend dem besseren Verständnis der Gestaltung wegen anhand der einzelnen Herstellungsschritte zum Erzeugen der Sackhülle erläutert.

Ausgangsbasis für die Sackhülle 20 ist ein zunächst rechteckiger Zuschnitt 33 eines textilen Flächengebildes. Das textile Flächengebilde ist beispielsweise ein Gewebe in Leinwandbindung, das plastifiziert ist um eine Wasserdichtigkeit herzustellen. Der Zuschnitt wird von zwei Querkanten 34 und 35 sowie zwei Längskanten 36 und 37 begrenzt. Neben der Querkante 35 ist der Zuschnitt unter Ausbildung einer Schlaufe 38 umgebogen und vernäht. Innerhalb der Schlaufe 38 befindet sich ein Kunststoffstab um im Bereich der schlauchförmigen Schlaufe 38 eine Verdickung zu erzeugen. Der Stab ist im Einzelnen nicht weiter dargestellt. Die Verdickung ist erforderlich um die betreffende Kante in einfacher Weise in dem Grundkörper verankern zu können. Die Art der Verankerung ist ebenfalls bekannt und braucht deswegen hier nicht im Einzelnen erläutert zu werden.

Damit sich der fertige Skisack 20 beim Nachgebrauch leicht zusammenlegen lässt, sind in dem Textilzuschnitt insgesamt vier parallel zu den beiden Längskanten 36 und 37 enthaltene Abnäher 39, 40, 41 und 42 vorgesehen. Die Abnäher definieren gleichsam Bügelfalten, indem sie auf der rechten Seite der Sackhülle 20 vorstehende Kederwülste 43 und 44 entstehen lassen, die wegen der Halbschlauchförmigen Darstellung von Fig. 3 lediglich auf der einen Seite zu erkennen sind. Auf der anderen Seite ist der Nahtbereich zu sehen. Die Abnähernähte 39, 40, 41, 42 teilen die Sackoberseite 22 von den Sackflanken 24, 25, bzw. die Sackunterseite von den Sackflanken 24, 25 ab.

Über jeder der Abnähernähte 39, 40, 41 und 42 liegt auf der linken Seite der Sackhülle 20 jeweils ein aufgeschweißtes Dichtungsband, wie es schematisch bei 45 veranschaulicht ist.

Unter linker Seite der Sackhülle 20 wird, wie in der Textiltechnik üblich, jene Seite verstanden, die bei dem fertigen Sack die Innenseite bildet, während die Außenseite als rechte Seite bezeichnet ist.

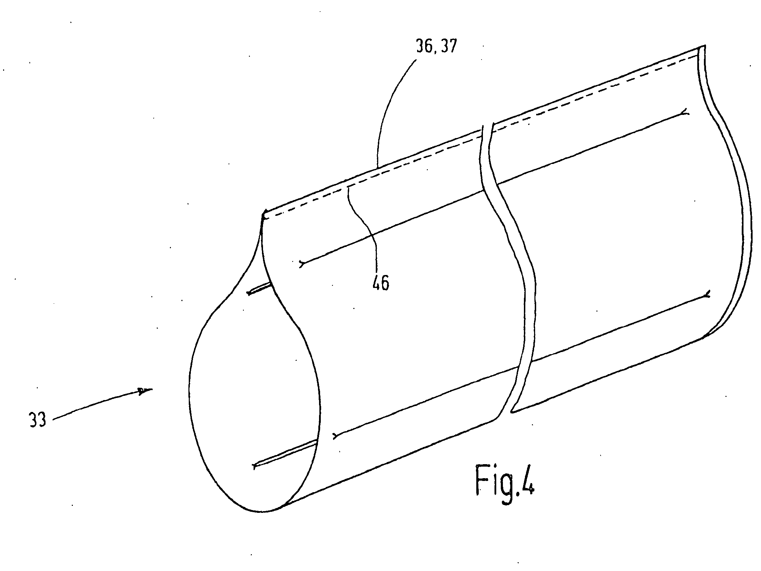

Nachdem die Sackhülle 20 wie in Fig. 3 gezeichnet vorbereitet ist, wird der Zuschnitt 33 gemäß Fig. 4 längs der beiden oberen Kanten 36 und 37 über die gesamte Länge vernäht. Hierdurch entsteht eine Naht 46. Die Naht 46 läuft von der Querkante 34 bis zu der Querkante 35 ununterbrochen und gerade durch. Zum Erzeugen der Naht 46 wird der Zuschnitt 33 mit der rechten Seite neben der Längskante 37 auf die rechte Seite neben der Längskante 36 gelegt und es wird parallel zu diesen deckungsgleichen Längskanten 36 und 37 die Geradstichnaht 46 angebracht.

Der Zuschnitt 33 hat somit die Gestalt eines Schlauches, der zwischen den Abnähernähten 39 und 43 eine Längsnaht aufweist, während er zwischen den Abnähernähten 40 und 42 ungeschnitten ist, die die Sackunterseite 23 begrenzen.

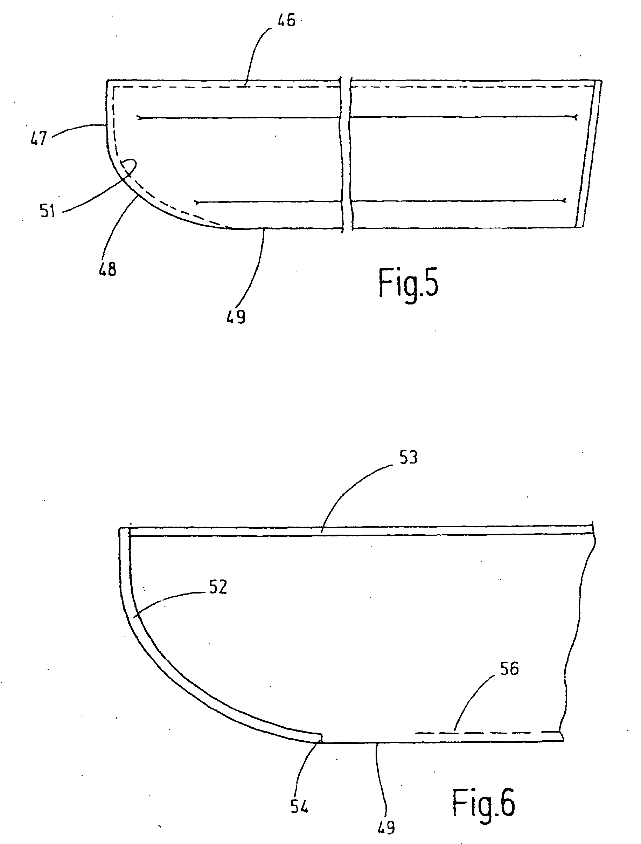

Nach dem Erzeugen des Schlauches gemäß Fig. 4 wird der Schlauch flach gelegt und im Bereich der Querkante 34 wie aus Fig. 5 ersichtlich, beschnitten. Das betreffende Schlauchende wird nunmehr von einem im wesentlichen gerade verlaufenden Schnittkantenabschnitt 47 und einem etwa einem Viertelkreis folgenden Schnittkantenabschnitt 48 begrenzt. Der Abschnitt 48 mündet tangential in den geraden Abschnitt 47 einerseits und andererseits tangential in eine durch das Flachlegen entstehende Faltkante 49 ein, die mittig zwischen den beiden Abnähernähten 40 und 42 liegt.

Abweichend von der gezeigten Anordnung besteht auch die Möglichkeit, den Viertelkreisförmigen Bereich 48 bis zu den oberen Längskanten 36, 37 durchlaufen zu lassen und auf den geraden Abschnitt 47 zu verzichten. Der gerade Abschnitt 47 hat den Vorteil, dass der Krümmungsradius des viertelkreisförmig gekrümmten Bereiches 48 kleiner gewählt werden kann, um eine bessere Ausnutzung im Bodenbereich des Skisacks 19 erzeugen zu können. Im Falle einer durchlaufenden viertelkreisförmigen Krümmung entspricht der Krümmungsradius der Höhe des Abstands zwischen der Faltkante 49 und den aufeinander liegenden Längskanten 36, 37.

Nachdem die flachgelegte Sackhülle 20 entsprechend beschnitten ist, wird sie bodenseitig durch eine Geradstichnaht 51 verschlossen, die die Bodennaht 21 bildet. Die Geradstichnaht 51 folgt der Kontur der Schnittkantenabschnitte 47 und 48 bis in den Bereich der Falte 49. Dadurch ist die Sackhülle 20 auch dort noch vernäht, wo sie an sich einstückig ineinander übergeht.

Bei der Herstellung der Nähnähte 46 und 51 wird durch die Nähnadel das an sich dichte Grundmaterial perforiert. Ohne besondere Gegenmaßnahmen wären diese Bereiche wasserdurchlässig. Es könnte beim späteren Gebrauch hier Wasser durchsickern.

Um eine Dichtigkeit herzustellen, wird nach dem Nähen längs den Schnittkanten 47 und 48 ein Dichtstreifen 52 aufgeklebt oder aufgeschweißt, der den freien Schnittrand U-förmig umgibt. Der Dichtstreifen oder das Dichtungsband besteht aus einem gegebenenfalls faserverstärkten wasserdichten Band, das mit dem Grundmaterial der Sackhülle 20 verkleb- oder verschweißbar ist. Das Dichtband umschließt die freien Schnittränder und überdeckt die Bodennaht 21, so dass die beim Nähen entstandene Perforation abgedichtet ist. Das Dichtband 52 reicht von der Längskante 36, 37 bis in den Bereich der Falte 49. Das Dichtband 52 endet im Bereich der Bodenfalte 59 weit hinter dem Ende der Naht 51.

Ein weiteres Dichtband 53 mit gleichem Aufbau überdeckt die freien Schnittkanten der beiden Längskanten 36 und 37 und dichtet so die dort vorhandene Naht 46 ab.

Zufolge des gekrümmten Verlaufes im Bereich der Querkante 48 und der tangentialen Einmündung in die Bodenfalte 49 beziehungsweise den geraden Abschnitt 47 ist es möglich, das Dichtband 52 von der Bodenfalte 49 bis zu der oberen Längskante 36, 37 ungeschnitten durchlaufen zu lassen. Damit ist die Anordnung in allen Bereichen, die von dem Dichtband 52 überdeckt werden, vierlagig. Es tritt in keinem kritischen Bereich ein Wechsel von einer Vierlagigkeit zu einer Sechslagigkeit oder einer Zweilagigkeit auf. Jede Änderung der Anzahl der Lagen würde eine Stufe entstehen lassen, die den Schweißvorgang behindert. Solche Stufen im Verlauf des Dichtbandes werden bei der Erfindung vermieden.

Die freien Schnittkanten, an denen das Dichtband 52 quer abgeschnitten ist, liegen unmittelbar auf der linken Seite der Sackhülle 20, wie sich dies aus der Darstellung bei 54 ergibt.

Der Bereich an dem eine Änderung der Anzahl der Lagen auftritt, ist jene Stelle, an der das Dichtband 52 mit dem Dichtband 53 zusammentrifft. Dieser Bereich könnte gegebenenfalls undicht sein, was aber praktisch keine Rolle spielt, weil beim Gebrauch diese Ecke oben liegt und sich folglich dort kein Wasser sammeln kann. Wenn überhaupt kann sich von den Skiern ablaufendes Wasser nur im Bereich des verrundeten Abschnittes 48 ansammeln. Hier ist die Sackhülle 20 jedoch hermetisch dicht.

Nachdem die Sackhülle 20 in der beschriebenen Weise fertig gestellt ist wird sie auf rechts gezogen, das heißt, die Dichtbänder 52 und 53 verschwinden im Inneren des Sacks. Die durch die Abnähernähte 39 .. 42 entstehenden Kederwülste 43, 44 sind nunmehr an der Außenseite des Skisacks 19 und bilden dort die erwähnten Soll-Faltstellen, an denen sich die Sackhülle 20 bevorzugt faltet, wenn sie ähnlich Fig. 6 auf die Seite d.h. die Sackflanke 24 oder 25 gelegt wird.

Die Naht 46 befindet sich im Gebrauch aufgrund der Einbaulage in die Skisackbox oben. Da diese Naht komplementär ausgerichtet ist wie die Abnähernähte 39 .. 42, wird die Sackhülle 20 dort bestrebt sein, sich nach Innen zu falten.

Um eine solche bevorzugte Faltung auch im Bereich der Sackunterseite 23 zwischen den Abnähernähten 40 und 42 zu erzeugen, kann die Bodenfalte 49 durch eine parallel verlaufende Geradstichnaht 56 fixiert werden. Zum Abdichten dieser Naht, die lediglich die Fixierung der Falte an der Unterseite bewerkstelligen soll, kann das Dichtungsband 52 auch ungeschnitten über diesen Bereich bis hin zu der schlauchförmigen Schlaufe 38 durchlaufen, um die bei der Naht erzeugten Nadelstiche abzudichten.

Die bevorzugt nach innen sich einfaltende Naht im Bereich der Falte an der Sackunterseite 23 erleichtert das Zusammenlegen des Skisacks 19 weiter. Gleichzeitig besteht nicht die Gefahr, dass irgendwelche Bereiche undicht werden, weil wie bereits erwähnt, das Dichtungsband 52 von der Längskante 36, 37 bis hin zu der schlauchförmigen Schlaufe 38 vollkommen ungeschnitten durchläuft, ohne dass sich die Zahl der Lagen an irgendeiner Stelle ändern würde.

Lediglich aus Übersichtlichkeitsgründen wurde bei der Erläuterung des Aufbaus anhand einer Beschreibung der Herstellung von einem rechteckigen Zuschnitt ausgegangen. Es kann jedoch ohne weiteres auch von einem Zuschnitt ausgegangen werden, der der Abwicklung der fertigen Sackhülle 20 nach dem Zuschnitt gemäß Fig. 5 entspricht. Ebenso ist es möglich, zunächst die Bodennaht 21 anzubringen und dann den zu einem Sack vernähten Zuschnitt 33 gemäß Fig. 5 zu beschneiden, ehe das Dichtungsband 52 aufgeschweißt wird.

Der Konstrukteur wird bestrebt sein, den Krümmungsradius im Bereich der gekrümmten Schnittkante 48 so klein wir irgend möglich zu wählen und den geraden Bereich 47 so weit wie möglich auszudehnen. Die Grenze hierfür ist das faltenfreie und somit dichte Auflegen des Dichtbandes 52. Das Entstehen von Falten würde das Ziel der weitgehenden Abdichtung unter Umständen vereiteln.

Ein Skisack weist eine Sackhülle auf, die im Bereich des Sackbodens so zugeschnitten ist, dass die zum Erzeugen des Sackbodens und Verschließen der Sackhülle vorgesehene Bodennaht von einem ungeschnitten durchlaufenden Dichtband abgedichtet werden kann.

## Patentansprüche

1. Skisackanordnung (19) zum verstauen von Skiern in einem Kraftfahrzeug,
mit einem Anschlussrahmen (17), der in eine Durchladeöffnung in dem Kraftfahrzeug (1) einsetzbar ist,
mit einer an dem Anschlussrahmen (17) befestigten Sackhülle (20), die aus einer wasserdichten Textilbahn (33) gebildet ist,
mit einer Längsnaht (46), die an der in der Gebrauchsstellung oberen Seite (22) vorhanden ist um die Längskanten (36,37) der die Sackhülle (20) schließlich bildenden Textilbahn (33) zu einem Schlauch zu verbinden, der im übrigen sonst in Umfangsrichtung ungeschnitten durchgeht,
mit einer Bodennaht (21), die an dem von dem Anschlussrahmen (17) abliegenden Ende vorhanden ist um den Textilschlauch zu einen Sack zu machen, wobei die Bodennaht (21) an einer Seite des Schlauchs beginnt, die bei dem fertigen Sack die Sackunterseite (23) bildet, und von dort zumindest angenähert einem Viertkreis folgend zu eine Stelle führt, die bei dem fertigen Sack von der Sackunterseite (23) beabstandet ist, und
mit einem Dichtband (52), das längs der Bodennaht (21) mit der Textilbahn (33) abdichtend stoffschlüssig verbunden ist, das die aufeinander liegenden freien Ränder (47,48) der Textilbahn (33) U-förmig derart umschließt, dass die Naht (21) überdeckt ist, und das über die Bodennaht (21) hinaus bis in den Bereich der Sackunterseite (23) reicht.

2. Skisackanordnung nach Anspruch 1, **dadurch gekennzeichnet, dass** die Bodennaht (21) sich aus dem bogenförmigen Abschnitt und einem geraden Nahtabschnitt zusammensetzt, der bis zu der Längsnaht (46) reicht.

3. Skisackanordnung nach Anspruch 1, **dadurch gekennzeichnet, dass** die Bodennaht (21) über ihre gesamte Länge gekrümmt verläuft.

4. Skisackanordnung nach Anspruch 1, **dadurch gekennzeichnet, dass** das Dichtband (51) im Bereich der Sackunterseite (23) mit seinem Rücken tangential zu der Sackhülle (20) verläuft, wenn der fertige Sack auf eine seiner Sackflanke (24,25) flach gelegt ist.

5. Skisackanordnung nach Anspruch 1, **dadurch gekennzeichnet, dass** die Längsnaht (46) mit einem Dichtband (51) versehen ist.

6. Skisackanordnung nach Anspruch 1, **dadurch gekennzeichnet, dass** der Sack an seiner Sackunterweite (23) eine Abnähernaht (56) aufweist, die beim gebrauchsfertigen Sack einen nach innen vorspringenden Kederschlauch erzeugt.

7. Skisackanordnung nach Anspruch 1, 2, 3 oder 5, **dadurch gekennzeichnet, dass** das jeweilige Dichtband (51,52) auf der linken Seite der Sackhülle (20) angeordnet ist und somit bei dem fertigen Sack auf dessen Innenseite liegt.

8. Skisackanordnung nach Anspruch 1, **dadurch gekennzeichnet, dass** in der Sackhülle (20) Abnähernähte (39..42) enthalten sind, die Sollfaltstellen definieren.

9. Skisackanordnung nach Anspruch 8, **dadurch gekennzeichnet, dass** die Abnähernähte (39..42) auf der rechten Seite der Sackhülle (20) liegen, derart, dass bei dem fertigen Sack durch die Abnähernähte (39,42) sich nach außen wölbende Kederschläuche (43,44) ergeben.

10. Skisackanordnung nach Anspruch 8, **dadurch gekennzeichnet, dass** zumindest einige der Abnähernähte (39..42) abgedichtet sind.

11. Skisackanordnung nach Anspruch 10, **dadurch gekennzeichnet, dass** die Abnähernähte (39..42) durch ein Dichtband (45) abgedichtet ist.

12. Skisackanordnung nach Anspruch 8, **dadurch gekennzeichnet, dass** die Abnähernähte (39..42) in Längsrichtung des Skisacks (19) laufen.

13. Skisackanordnung nach Anspruch 1, **dadurch gekennzeichnet, dass** das Dichtband (51,52) mit der Sackhülle (19) stoffschlüssig verbunden ist.

14. Skisackanordnung nach Anspruch 1, **dadurch gekennzeichnet, dass** das Dichtband (51,52) mit der Sackhülle (19) verklebt oder verschweißt ist.

15. Skisackanordnung nach Anspruch 1, **dadurch gekennzeichnet, dass** das Dichtband (51,52) textilverstärkt ist.

16. Skisackanordnung nach Anspruch 1, **dadurch gekennzeichnet, dass** der Sack an seinem offenen Ende eine um die Sacköffnung (27) umlaufende Wulst (38) aufweist.

## Claims

1. Ski bag arrangement (19) for stowing skis in a motor vehicle,
with a connection frame (17), which can be inserted into a through loading opening in the motor vehicle (1),
with a bag casing (20), which is fastened to the connection frame (17) and is made from a watertight textile web (33),
with a longitudinal seam (46), which is arranged on the upper side (22) in the position of use in order to join the longitudinal edges (36, 37) of the textile web (33) that ultimately forms the bag casing (20) to form a pouch, which otherwise extends continuously uncut in the peripheral direction,
with a base seam (21), which is arranged on the end remote from the connection frame (17) to form the textile pouch into a bag, wherein the base seam (21) begins at a side of the pouch, which forms the bag underside (23) in the finished bag, and from there at least approximately following a quadrant leads to a location, which is spaced from the bag underside (23) in the finished bag, and
with a sealing tape (52), which is integrally bonded to the textile web (33) along the base seam (21) to form a seal and which encloses the consecutive free edges (47, 48) of the textile web (33) in a U shape such that the seam (21) is covered, and which extends beyond the base seam (21) into the region of the bag underside (23).

2. Ski bag arrangement according to claim 1, **characterised in that** the base seam (21) consists of the arc-shaped section and a straight seam section, which extends as far as the longitudinal seam (46).

3. Ski bag arrangement according to claim 1, **characterised in that** the base seam (21) runs on a curve over its entire length.

4. Ski bag arrangement according to claim 1, **characterised in that** the sealing tape (51) runs in the region of the bag underside (23) with its back tangentially to the bag casing (20) when the finished bag is laid flat on one of its bag flanks (24, 25).

5. Ski bag arrangement according to claim 1, **characterised in that** the longitudinal seam (46) is provided with a sealing tape (51).

6. Ski bag arrangement according to claim 1, **characterised in that** on its bag underside (23) the bag has a dart seam (56), which generates an inwardly projecting edging pocket when the bag is ready for use.

7. Ski bag arrangement according to claim 1, 2, 3 or 5, **characterised in that** the respective sealing tape (51, 52) is arranged on the left side of the bag casing (20) and therefore lies on the inside thereof in the finished bag.

8. Ski bag arrangement according to claim 1, **characterised in that** dart seams (39..42), which define predetermined folding points, are contained in the bag casing (20).

9. Ski bag arrangement according to claim 8, **characterised in that** the dart seams (39..42) lie on the right side of the bag casing (20) in such a way that outwardly arching edging pockets (43, 44) are formed as a result of the dart seams (39, 42) in the finished bag.

10. Ski bag arrangement according to claim 8, **characterised in that** at least some of the dart seams (39..42) are sealed.

11. Ski bag arrangement according to claim 10, **characterised in that** the dart seams (39..42) are sealed by a sealing tape (45).

12. Ski bag arrangement according to claim 8, **characterised in that** the dart seams (39..42) run in the longitudinal direction of the ski bag (19).

13. Ski bag arrangement according to claim 1, **characterised in that** the sealing tape (51, 52) is integrally bonded to the bag casing (19).

14. Ski bag arrangement according to claim 1, **characterised in that** the sealing tape (51, 52) is glued or welded to the bag casing (19).

15. Ski bag arrangement according to claim 1, **characterised in that** the sealing tape (51, 52) is fabric-reinforced.

16. Ski bag arrangement according to claim 1, **characterised in that** the bag has a beading (38) extending around the bag opening (27) on its open end.

## Revendications

1. Sac à skis (19) pour arrimer des skis dans un véhicule automobile, ce sac comportant :
- un cadre de raccordement (17) qui peut être inséré dans une ouverture d'accueil prévue dans le véhicule (1),
- fixée au cadre de raccordement, une enveloppe de sac (20) qui est constituée d'une bande textile (33) étanche à l'eau,
- sur la face supérieure (22) du sac en position d'utilisation, une couture longitudinale qui relie les bords longitudinaux (36, 37) de la bande textile (33) de manière à former un tuyau qui par ailleurs se poursuit sans être coupé en direction périphérique,
- à l'extrémité éloignée du cadre de raccordement (17), une couture de fond (21) pour transformer le tuyau textile en un sac, cette couture commençant sur le côté du tuyau qui devient la face inférieure (23) du sac achevé pour de là, en décrivant approximativement un quart de cercle atteint un point qui, dans le sac achevé, est éloigné de la face inférieure du sac (23),
- une bande d'étanchéité (52) qui, par liaison de matière, est reliée de manière étanche à la bande textile (33) le long de la couture de fond (21) et qui entoure les bords (47, 48) disposés librement l'un sur l'autre, de la bande textile (33) en formant un U de manière à recouvrir la couture (21) en passant sur celle-ci pour aller jusqu'à la zone de la face inférieure du sac (23).

2. Sac à skis selon la revendication 1, **caractérisé en ce que** la couture de fond (21) est composée de la partie en arc de cercle et d'une partie rectiligne qui va jusqu'à la couture longitudinale (46).

3. Sac à skis selon la revendication 1, **caractérisé en ce que** la couture de fond (21) est courbe sur toute sa longueur.

4. Sac à skis selon la revendication 1, **caractérisé en ce que** dans la zone de la face inférieure du sac (23), la bande d'étanchéité (52) est tangente par son dos avec l'enveloppe de sac (20) quand celui-ci, à l'état achevé, est placé à plat sur un de ses flancs latéraux (24, 25).

5. Sac à skis selon la revendication 1, **caractérisé en ce que** la couture longitudinale (46) est équipée d'une bande d'étanchéité (51).

6. Sac à skis selon la revendication 1, **caractérisé en ce que** le sac, sur sa face inférieure (23) présente une couture pincée (56) qui forme dans le sac achevé un tuyau couche-point en saillie vers l'intérieur.

7. Sac à skis selon la revendication 1, 2, 3 ou 5, **caractérisé en ce que** chaque bande d'étanchéité (51, 52) est disposée sur le côté gauche de l'enveloppe de sac (20) et donc sur la face interne du sac achevé.

8. Sac à skis selon la revendication 1, **caractérisé en ce que** l'enveloppe de sac (20) porte des coutures pincées (39...42) qui définissent des zones de pliage imposées.

9. Sac à skis selon la revendication 8, **caractérisé en ce que** les coutures pincées (39...42) sont disposées sur le côté droit de l'enveloppe de sac (20) de sorte que, dans le sac achevé, elles donnent des tuyaux couche-points (43, 44).

10. Sac à skis selon la revendication 8, **caractérisé en ce qu'**au moins certaines coutures pincées (39...42) sont étanches.

11. Sac à skis selon la revendication 10, **caractérisé en ce que** les coutures pincées (39...42) sont rendues étanches par une bande d'étanchéité.

12. Sac à skis selon la revendication 8, **caractérisé en ce que** les coutures pincées (39...42) sont disposées longitudinalement dans le sac (19).

13. Sac à skis selon la revendication 1, **caractérisé en ce que** chaque bande d'étanchéité (51, 52) est reliée par la matière à l'enveloppe du sac (19).

14. Sac à skis selon la revendication 1, **caractérisé en ce que** chaque bande d'étanchéité (51, 52) est reliée par collage ou soudage à l'enveloppe de sac.

15. Sac à skis selon la revendication 1, **caractérisé en ce que** chaque bande d'étanchéité (51, 52) est dotée d'un renfort textile.

16. Sac à skis selon la revendication 1, **caractérisé en ce que** le sac, à son extrémité ouverte, présente un bourrelet (38) qui entoure l'ouverture de sac (27).
